# EUROPÄISCHE PATENTSCHRIFT

(11) **EP 4 204 796 B1**
(45) Veröffentlichungstag und Bekanntmachung des Hinweises auf die Patenterteilung: **01.10.2025**
(21) Anmeldenummer: 21816321.0
(22) Anmeldetag: 26.08.2021
(51) Int. Cl.: G01N 23/20016, G12B 1/00

(54) **VORRICHTUNG ZUR ROTATION EINER PROBE UM ZWEI ORTHOGONALE ACHSEN**
DEVICE FOR ROTATING A SPECIMEN ABOUT TWO ORTHOGONAL AXES
DISPOSITIF POUR METTRE EN ROTATION UN ÉCHANTILLON AUTOUR DE DEUX AXES ORTHOGONAUX

(30) Priorität: 28.08.2020 DE 102020122517
(43) Veröffentlichungstag der Anmeldung: 05.07.2023
(73) Patentinhaber: Helmholtz-Zentrum Berlin für Materialien und Energie GmbH, 14109 Berlin (DE)
(72) Erfinder: VARYKHALOV, Andrei, 12489 Berlin (DE)
(86) Internationale Anmeldenummer: PCT/DE2021/100716
(87) Internationale Veröffentlichungsnummer: WO 2022/042800

(56) Entgegenhaltungen:
- DE-A1- 10 260 058
- DE-A1- 102009 001 587
- US-A1- 2012 074 320

## Beschreibung

Die Erfindung bezieht sich auf eine Vorrichtung zur Positionierung einer Probe, wie diese insbesondere in wissenschaftlichen Geräten aber auch in der industriellen Fertigung verwendet wird.

In vielen Bereichen der wissenschaftlichen Charakterisierung von Proben oder bei der Bearbeitung von Werkstücken ist gefordert, eine Probe bzw. ein Werkstück in den drei Raumrichtungen zu Translatieren und um die drei Raumrichtungen zu rotieren um eine avisierte Ausrichtung einzustellen bzw. die Ausrichtung während einer wissenschaftlichen Charakterisierung oder einer Bearbeitung zu ändern, kontinuierlich oder schrittweise.

Eine Probe bedeutet im Sinne der Erfindung ein Material, auch als Werkstoff anzusprechen, welches zu beproben ist, d.h. mittels wissenschaftlicher Untersuchungsverfahren auf bestimmte Merkmale hin zu charakterisieren. Die Probe kann dadurch auch ein Bauteil sein, welches aus einem Material bzw. Werkstoff gefertigt ist, welches bzw. welcher zu beproben oder zu bearbeiten ist.

Die Translation entlang der drei Raumrichtungen ist trivial und wird durch allseits bekannte Vorrichtungen, wie diese z.B. an optischen Mikroskopen oder in CNC-Maschinen zum Einsatz kommen, realisiert.

Die Rotation einer Probe um die drei Raumachsen wird im wissenschaftlichen Bereich insbesondere durch sogenannte Goniometer realisiert. In dem Aufsatz 1 von J. Yao et al. (Design and construction of a triple-axis ultrahigh vacuum goniometer, Review of Scientific Instruments, Vol. 69, 1998, S. 306 - 309) ist z.B. ein drei-Achsen-Goniometer offenbart und in dem Aufsatz 2 von T. Vosegaard et al. ( A new goniometer design for single-crystal nuclear magnetic resonance spectroscopy, Review of Scientific Instruments, Vol. 67, 1996, S. 2130 - 2133) z.B. ein zwei-Achsen-Goniometer. Ähnliche Probenrotationsvorrichtungen sind außerdem aus DE 102 60 058 und DE 10 2009 001587. bekannt

Vor allem für Anwendungen im wissenschaftlichen Bereich, sind die Anforderungen an Goniometer hoch. So müssen diese wohlmöglich platzsparend, hochvakuumtauglich und in einem weiten Temperaturbereich, sowohl im Kryobereich (Temperaturen im Bereich von flüssigem Helium) als Hochtemperaturbereich (bis 1000 °C und gegebenenfalls größer), einsetzbar sein. Dazu kommen kann zudem - z.B. für die Untersuchung magnetischer Eigenschaften einer Probe- die Anforderung, einen Eintrag elektromagnetischer Felder, wie er z.B. durch Elektromotoren erfolgt, für die zu untersuchenden Proben auszuschließen.

### Aufgabe der Erfindung

Die Aufgabe der Erfindung ist es eine Vorrichtung zur Rotation einer Probe um zwei orthogonale Achsen anzugeben, die es ermöglicht eine Probe simultan und unabhängig voneinander in drei Raumrichtungen zu drehen ohne die Erzeugung elektromagnetischer Felder am Probenort. Eine weitergehende Aufgabe ist es die Vorrichtung auch für einen Einsatz im Hochvakuum und im Tieftemperaturbereich auszulegen sowie für eine Miniaturisierung.

Die Aufgabe wird gelöst durch den Gegenstand des Anspruchs 1. Vorteilhafte Ausgestaltungen sind Gegenstand der Unteransprüche.

Der Gegenstand des Anspruchs 1 betrifft eine Vorrichtung zur Rotation einer Probe um zwei orthogonale Achsen. Diese Vorrichtung umfasst dabei zunächst mindestens eine Basis. Die Basis ist durch jedweden Gegenstand realisierbar, an dem ein Sockel, der von der Vorrichtung ebenfalls mindestens umfasst ist, drehbar anordenbar ist. Ein solcher Gegenstand ist z.B. durch eine Vorrichtung zur wissenschaftlichen Charakterisierung (z.B. ein Spektrometer), einen Kryostaten oder eine Werkbank realisierbar oder durch reversibel zu befestigende Teile der vorgenannten Vorrichtungen. Die Basis ist in Bezug auf die Vorrichtung zur Rotation einer Probe um zwei orthogonale Achsen das feststehende Element und nicht notwendigerweise selbst fixiert in Bezug auf ein, auf die Vorrichtung bezogen äußeres Koordinatensystem.

Die Vorrichtung umfasst weiterhin mindestens einen Sockel, welcher drehbar um eine erste Achse T der zwei orthogonalen Achsen an der Basis angeordnet ist. Diese erste Achse T liegt dabei exzentrisch von dem Sockel. Die Ausführung, in der die Achse T außerhalb des Sockels liegt, ist vorteilhaft, da diese die Anordnung aller Bauteile der Vorrichtung vereinfacht. Die exzentrische des Sockels liegende Achse drehbare Anordnung ist durch mindestens ein Versatzstück, das an dem Sockel fixiert ist, d.h. nicht bewegbar und insbesondere nicht drehbar und an dem, an der von dem Sockel wegweisenden Seite eine Drehachse anzubringen ist, gegeben. Die Drehachse ist dabei durch eine, in dem Versatzstück oder an der Basis drehbar gelagerte Achse gegeben, die an der Basis bzw. dem Versatzstück fixiert ist. Diese Achse definiert die erste Achse T des Koordinatensystems. In vorteilhafter Weise ist auf der gegenüberliegenden Seite des Sockels ein entsprechendes Versatzstück angeordnet, dessen Drehachse mit der Achse T zusammenfällt. Die Achse ist hier immer durch die Verbindungsstrecke, ungeachtet deren Länge, zwischen Versatzstück und Basis bestimmt.

Zur Rotation des Sockels um die Achse T ist in einer ersten Ausführungsform ein, an dem Sockel außerhalb des Bereichs der Projektion der Drehachse auf den Sockel angreifendes, und diesen auslenkendes, mechanisches Mittel zur Rotation des Sockels um die Achse T des Koordinatensystems angeordnet. Dieses mechanische Mittel zur Rotation ist in der ersten Ausführungsform ein Kurbeltrieb, wie er von Kurbelgetrieben, z.B. aus dem Motorenbau, bekannt ist. Die Auslenkung des Sockels erfolgt dabei tangential zur Rotation um die Achse T, so dass der Sockel bei Auslenkung des Kurbeltriebs mittels einer Schiebestange um diese Achse T rotiert. Der Kurbeltrieb ist mechanisch durch die Schiebestange zu betätigen. Der zu bewirkende Hub und damit die verursachte Rotation ist durch angepasste Dimensionierung zu bewirken. Das Mittel zur Rotation um die Achse T dient in diesem Ausführungsbeispiel auch zur Aufhängung bzw. Stabilisierung, im Sinne der Stabilisierung in Bezug auf die Rotation um die Achse T, des Sockels.

Auf dem Sockel ist ein Probenhalter angeordnet. Dieser ist um eine zweite Achse A des orthogonalen Koordinatensystems auf dem Sockel drehbar. Erfindungsgemäß ist der Probenhalter aus einem Zylinder gebildet, wobei die Zylinderachse die Achse A bildet und wobei an einem Ende des Zylinders eine Probenaufnahme angeordnet ist. Der Mittelpunkt der Probenaufnahme fällt dabei mit der Achse T zusammen, so dass der Mittelpunkt der Probenaufnahme mit dem Schnittpunkt der Achse A mit der Achse T, zusammenfällt. Der Probenhalter ist dabei drehbar um die Achse A angeordnet, z.B. mittels eines Lagers, welches auf dem Sockel befestigt ist.

Ein mechanisches Mittel zur Rotation um die zweite Achse A der zwei orthogonalen Achsen der Vorrichtung ist durch eine erste Traversierwinde realisiert Die zwei Enden einer Seilschlaufe greifen direkt an dem Zylinder des Probenhalters oder über ein Zwischenstück (Hülse auf dem Zylinder) an diesem an, so dass dieser (mittelbar oder unmittelbar) als Winde der Traversierwinde fungiert. Die Seilenden sind in der Nullstellung an der Winde so angebracht, dass diese jeweils gegenläufig die Winde zur Hälfte umspannen und dabei auf derselben Länge der Winde befestigt sind. Der Unterschied in dem Umfang einer Schlaufe, abhängig vom Grad der Aufwicklung auf der Winde, ist durch einen Spanner bzw. eine Spannvorrichtung, z.B. mit Federkraft, auszugleichen. In einer dritten Ausführungsform wird die Seilschlaufe der Traversierwinde über mindestens drei, insbesondere vier Umlenkrollen geführt, wobei mindestens zwei der Umlenkrollen so angeordnet sind, dass die Schlaufe (bzw. die Seile) zwischen diesen beiden Umlenkrollen mit der Achse T zusammenfällt und wobei in dieser Ausführungsform der Mittelpunkt der Winde mit dem Schnittpunkt der Achsen A und T zusammenfällt, d.h. auch mit dem Mittelpunkt der Probenaufnahme in dem Probenhalter. Über einen Zug an der Seilschlaufe (den Seilen) wird die Winde gedreht und mithin die Probenaufnahme und eine darin befindliche Probe. Die Rotation der Probenaufnahme hat somit eine lineare Übertragungsrichtung entlang der Achse T, senkrecht zu der Achse A, die durch die Seilschlaufe und deren Führung gebildet ist. Diese lineare Übertragungsrichtung, die durch eine Rotation der Probenaufnahme um die Achse T und um die Achse A örtlich unverändert bleibt, entkoppelt die Rotationen um die beiden Achsen A und T, wodurch ein Vorteil der Erfindung begründet ist. Durch diese Entkopplung sind die beiden Achsen A und T unabhängig von der Rotation stets orthogonalen zueinander. Eine weitere dritte Rotation um eine dritte Achse Z ist entkoppelt möglich, in dem die Basis oder die Vorrichtung entsprechend um die Achse Z als Ganzes gedreht wird und auch diese Rotation somit entkoppelt erfolgt, in dem Sinne, dass der orthogonale Winkel zwischen den Achsen A und T und deren Orientierung in Bezug auf diese Achse Z während der Rotation erhalten bleibt und ein weiterer orthogonaler Winkel, z. B. zwischen der Achse T und der Achse Z ebenfalls erhalten bleibt. In vorteilhafter Weise ist die Achse Z so orientiert, dass sie sich im Schnittpunkt der Achsen A und T mit diesen schneidet.

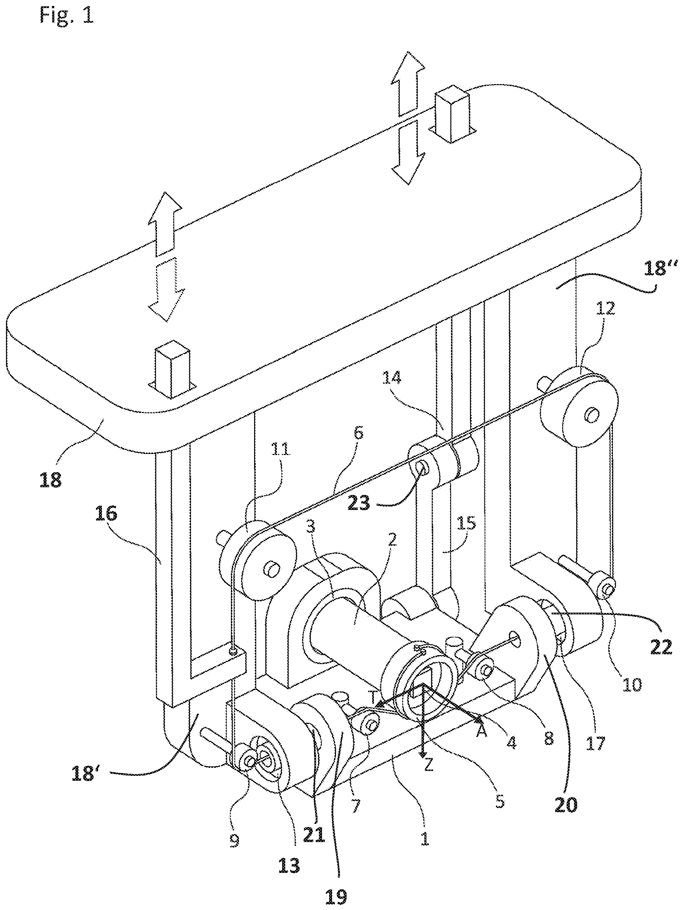

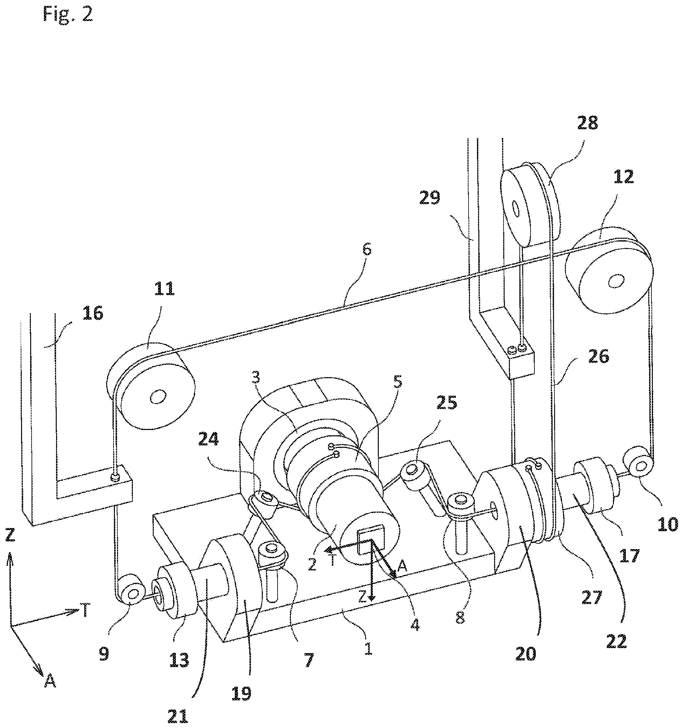

Zur Rotation des Sockels um die Achse T ist in einer zweiten Ausführungsform ein mechanisches Mittel zur Rotation an dem Ende des mindestens einen Versatzstück angeordnet, welches die Drehachse umfasst. Das Mittel greift somit direkt an der Drehachse (Achse T) an. Dieses mechanische Mittel zur Rotation ist gebildet aus einer zweiten Traversierwinde, deren Windenschwerpunkt mit der Achse T zusammenfällt. Eine Traversierwinde ist eine Seilwinde, an der zwei Enden einer Seilschlaufe bzw. zwei Seile angreifen. Die Seilenden sind in der Nullstellung an der Winde so angebracht, dass diese jeweils gegenläufig die Winde zur Hälfte umspannen und dabei auf derselben Länge der Winde angebracht sind (siehe auch oben). Der Unterschied in dem Umfang der Schlaufe, abhängig vom Grad der Aufwicklung auf der Winde, ist durch einen Spanner bzw. eine Spannvorrichtung, z.B. mit Federkraft, auszugleichen. Die Funktionsweise einer Traversierwinde lässt sich gut anhand der Figuren 1 und 2 der Ausführungsbeispiele und deren Beschreibung nachvollziehen. Die zweite Traversierwinde dient in dieser Ausführungsform auch zur Aufhängung bzw. Lagerung, im Sinne der Stabilisierung in Bezug auf die Rotation um die Achse T, des Sockels.

Die erste und zweite Traversierwinde sind jeweils über einen Arm, der fest mit dem jeweiligen Seil der Winde verbunden ist zu bedienen, d.h. die Rotation ist durch Verschieben des Arms entlang der Führung des Seils in der Schleife zu bewirken, wodurch an der Seilschlaufe bzw. dem Seil ein Zug entsteht, der die Winde dreht. Dabei ist es gerade eine Eigenschaft der Traversierwinden, die hier vorteilhaft genutzt wird, dass der Zug in eine Richtung, z.B. vermittelt über den Arm, sich in gleichem Maße entgegengesetzt auf die andere Richtung auswirkt, da das Rotieren der Winde in eine Richtung, und dabei Abrollen des Seils in dieser Richtung, immer gleichzeitig bewirkt, dass das Seil aus der anderen Richtung entsprechend auf der Winde aufgewickelt wird und dieses Prinzip symmetrisch in beide Drehrichtungen erfolgt.

Wird der Probenhalter und mit ihm eine Probe in der Probenaufnahme über die erste Traversierwinde um die Achse A gedreht, geschieht dies unabhängig von einer Rotation um die Achse T, da die Übertragungsrichtung für die Rotation des mechanischen Mittels zur Rotation um die zweite Achse A (das ist die erste Traversierwinde) mit der Achse T zusammenfällt. Dieses Prinzip, dass die Übertragungsrichtung der Rotation um die Achse A entlang der Achse T erfolgt, ermöglicht die unabhängige Rotation um die zwei orthogonalen Achsen A und T, da die Rotationen den rechten Winkel zwischen den Achsen nicht beeinflusst. Die Rotation um eine dritte Achse Z erfolgt durch die Rotation der gesamten Basis oder der Vorrichtung, wie es einer vierten Ausführungsform entspricht. Diese Rotation ist z.B. durch eine drehbare Lagerung der Basis zu erreichen. Diese dritte Rotation um die Achse Z erfolgt dabei auch unabhängig von den Rotationen um die Achsen T und A und insbesondere in vorteilhafter Weise so, dass die Achse Z die Achsen T und A in deren Schnittpunkt schneidet, so dass alle drei Rotationen auch simultan, z.B. während einer Analyse einer Probe in der Probenaufnahme auszuführen sind, da sich der Mittelpunkt der Probenaufnahme nicht verschiebt und somit die jeweiligen Rotationen um eine der Achsen T, A und Z, diesbezüglich nicht berücksichtigt werden muss.

Eine etwaige Verdrehung der Seile der zweiten Traversierwinde bei einer Rotation um die Achse T ist eventuelle bei der Wahl der Seile zu berücksichtigen und ansonsten zu vernachlässigen.

In einer fünften Ausführungsform ist die Winde der Traversierwinde entlang des Zylinders und damit entlang der Achse A verschoben. Die Schlaufe der zweiten Traversierwinde wird über weitere mindestens zwei Umlenkrollen, die auf dem Sockel angeordnet sind, parallel zur Achse T bis zu dem Ort der Winde versetzt. Dabei sind die mindestens zwei zusätzlichen Umlenkrollen parallel zu der Achse T angeordnet so dass die Enden des Seils der Seilschlaufe senkrecht zu der Achse A an der versetzten Winde enden. Der Vorteil dieser Ausführungsform liegt darin, dass die Probenaufnahme nicht mit dem Ort der Winde zusammenfällt und ein Probenwechsel damit vereinfacht erfolgen kann. Die Wirkweise bleibt dabei unverändert, d.h. die Rotationen um die Achsen A und T sind weiterhin unabhängig und entkoppelt.

Der Vorteil der Verwendung von Traversierwinden liegt auch darin begründet, dass diese in Abhängigkeit der Länge der Schlaufe auch von einem, von der Probenaufnahme relativ weit entfernten Ort aus mechanisch zu bedienen sind. Die Traversierwinden sowohl als auch der Kurbeltrieb sind aus Materialien zu fertigen, die einem Einsatz in einem avisierten Temperaturbereich leicht anzupassen sind. Auch ist die einfache Ausführung ohne größeren Aufwand zu Miniaturisieren. Die rein mechanische Wirkweise in der Nähe der Probenaufnahme, die einen Einfluss elektromagnetischer Strahlung minimiert kann dabei außerhalb eines Analysesystems durch elektrische Antriebe betätigt werden, wenn diese abgeschirmt bzw. und/oder weit genug entfernt sind.

### Ausführungsbeispiel

Die Erfindung wird nachfolgend anhand von zwei Figuren und zwei Ausführungsbeispielen näher erläutert.

Die Figuren zeigen:
- Fig.1: Schematische Darstellung der erfindungsgemäßen Vorrichtung zur Rotation einer Probe um zwei orthogonale Achsen entsprechend einem ersten Ausführungsbeispiel;
- Fig. 2: Schematische Darstellung der erfindungsgemäßen Vorrichtung zur Rotation einer Probe um zwei orthogonale Achsen entsprechend einem zweiten Ausführungsbeispiel;

Ein erstes Ausführungsbeispiel für eine erfindungsgemäße Vorrichtung zur Rotation einer Probe um zwei orthogonale Achsen ist schematisch in der Fig. 1 gegeben. Die Vorrichtung umfasst zunächst eine Basis 18, 18', 18". Die Basis 18, 18', 18" kann dabei z.B. in einem Kryostaten, einem Spektrometer oder Diffraktometer zur Untersuchung einer Probe angeordnet sein. Die Basis ist in den Ausführungsbeispielen aus einer Grundplatte 18 und zwei Auslegern 18', 18" gebildet. Weiterhin umfasst die Vorrichtung einen Sockel 1. Auf dem Sockel 1 ist eine Halterung 3 mit einem Lager für den Probenhalter 2 angeordnet. Der Probenhalter 2 ist zylindrisch ausgebildet. Die Zylinderachse des Probenhalters 2, um die dieser auch drehbar ist, bildet die zweite Achse A der zwei orthogonalen Achsen der Vorrichtung. An einer Seite weist der Probenhalter 2 eine Probenaufnahme 4 auf. An der gleichen Seite des Probenhalters 2 ist außen eine Hülse 5 befestigt, die die Winde der ersten Traversierwinde bildet und mit dem Probenhalter 4 fest verbunden ist. Deren Windenschwerpunkt fällt mit der Achse A und dem Mittelpunkt der Probenaufnahme 4 zusammen.

Eine erste Traversierwinde dient als mechanisches Mittel zur Rotation um die Achse A. Die Traversierwinde ist gebildet durch eine Winde 5, an der zwei Enden einer Seilschlaufe 6 angreifen. Die Seilenden sind in der Nullstellung (Stellung in der Fig. 1) an der Winde 5 so angebracht, dass diese jeweils gegenläufig die Winde 5 zur Hälfte umspannen und dabei auf derselben Länge der Winde 5 (in der Figur oben auf der Winde) befestigt sind. Der Unterschied in dem Umfang der Schlaufe, abhängig vom Grad der Aufwicklung auf der Winde, ist durch eine Spannvorrichtung (nicht gezeigt) z.B. mit Federkraft auszugleichen. Die Führung der Seilschlaufe 6 erfolgt zu einem Teil senkrecht zu der Achse A über vier Umlenkrollen 7, 8, 9, 10, durch welche eine Strecke, die die Achse T bildet, gebildet ist. Die Umlenkrollen 7, 8, 9, 10 sind im Ausführungsbeispiel zum Teil auf dem Sockel 7, 8 und zum Teil 9, 10 an den Ausläufern der Basis 18', 18"angeordnet. Die weiter Führung der Seilschlaufe erfolgt senkrecht zu der Achse T durch zwei weitere Umlenkrollen 11, 12, die an den Ausläufern 18', 18" der Basis befestigt sind. Die Achse A und die Achse T schneiden sich am Mittelpunkt der Probenaufnahme 4.

Dies erste Traversierwinde ist über einen Arm 16, der fest mit der Seilschlaufe 6 der Traversierwinde verbunden ist, bedienbar, in dem der Arm 16 linear verschoben wird und damit entsprechend der wirkweise der Traversierwinde, die Winde 5 gedreht wird und mithin auch die Probenaufnahme 4 und damit auch eine sich eventuell darin befindliche Probe um die Achse A.

An dem Sockel 1 sind weiterhin zwei Versatzstücke 19, 20 symmetrisch, außen an einem ersten Ende des Sockels angeordnet. An deren von dem Sockel wegweisenden Enden befinden sich Bohrungen zur Durchführung der Seilschlaufe 6 der ersten Traversierwinde entlang der Achse T. Des Weiteren sind an diesen Enden, von dem Sockel aus betrachtet zwei nach außen weisende Rohrstücke 21, 22 entlang der Achse T fest angeordnet, durch die die Seilschlaufe der ersten Traversierwinde ebenfalls geführt ist. Die Rohrstücke 21, 22 sind an den zwei Ausläufern 18', 18" der Basis der Vorrichtung drehbar, in jeweils einem Lager 13, 17, gelagert. Der Sockel 1 ist somit exzentrisch um die Achse T drehbar gelagert.

Zur Rotation des Sockels 1 um die Achse T ist in dem ersten Ausführungsbeispiel das Mittel zur mechanischen Rotation um die Achse T gebildet aus einem Kurbeltrieb. Hierzu ist an einem, dem ersten Ende des Sockels 1, an dem die Versatzstücke 19, 20 angeordnet sind, gegenüber liegendem Ende ein Gelenkarm (auch als Schubstange ansprechbar) 15 drehbar angeordnet, der wiederum über ein Gelenk (auch als Kreuzkopf ansprechbar) 23 mit einer Schiebestange (auch als Kolbenstange ansprechbar) 14 verbunden ist. Durch die lineare Bewegung der Schiebestange 14, wird der Gelenkarm 15 ausgelenkt und erzeugt einen Schub bzw. Hub auf den Sockel 1, wodurch dieser um die Achse T gedreht wird. Die Auslenkung des Sockels 1 bei der Rotation um die Achse T wird durch die Verbindung des Gelenkarms 15 mit der Schiebestange 14 über das Gelenk 23 mitverfolgt. Das Ganze ist zusammengefasst als Kurbeltrieb ansprechbar.

Durch das Zusammenfallen eines Teils der Führung der Seilschlaufe 6 der ersten Traversierwinde mit der Achse T und dem Umstand, dass mittels der Traversierwinde über diesen Teil eine lineare Übertragungsrichtung für die Rotation um die Achse A der Probenaufnahme 4 erfolgt, sind die Rotationen um die Achse A und die um die Achse T entkoppelt, was einen Vorteil der Erfindung bildet. Diese Entkopplung ermöglicht zugleich eine entkoppelte Rotation um die dritte Achse Z. Alle drei Rotationen um die Achsen A, T und Z einer Probe in der Probenaufnahme 4, deren Mittelpunkt mit dem Schnittpunkt der Achsen A und T und Z zusammenfällt, können somit ausgeführt werden ohne, dass die Probe aus dem Mittelpunkt herausbewegt wird.

Die in den Figuren abgebildeten Koordinatensysteme entsprechen der momentanen Orientierung der Achsen A, T und Z zueinander, wie sie dem Zustand der abgebildeten Rotation entspricht. Die Achse Z ist in beiden Ausführungsbeispielen in vorteilhafter Weise so orientiert, dass sie sich mit den Achsen A und T in demselben Punkt schneidet.

Erfindungsgemäß ist am Probenort kein elektrischer Antrieb vonnöten. Alle Drehbewegungen sind am Ort der Probe mechanisch vermittelbar. Der Einfluss elektromagnetischer Felder ist somit reduziert. Alle Teile der Vorrichtung sind aus Materialien anzufertigen, die Hochvakuumtauglich, Tieftemperaturtauglich und/oder Hochtemperaturtauglich sind. Insbesondere für den Hochvakuumbereich ist die Vorrichtung besonders geeignet, da die Durchführungen in den Hochvakuumbereich für die Rotationen auf zwei reduzierbar sind.

Ein zweites Ausführungsbeispiel für eine erfindungsgemäße Vorrichtung zur Rotation einer Probe um zwei orthogonale Achsen ist schematisch in der Fig. 2 gegeben. In der Fig. 2 ist die Basis 18, 18', 18" gebildet aus der Grundplatte 18 und den beiden Ausläufern 18', 18" aus Gründen der Übersichtlichkeit nicht mit abgebildet. Das Mittel zur mechanischen Rotation um die Achse T ist in dem zweiten Ausführungsbeispiel als eine zweite Traversierwinde ausgebildet. Der Kurbeltrieb (14, 15, 23 in Fig. 1) entfällt hierdurch. Die Winde 27 der zweiten Traversierwinde ist hierzu fest auf dem Rohrstück 22, durch den ein Teil der Seilschlaufe 6 der ersten Traversierwinde geführt ist, angebracht. Die Seilschlaufe 26 der zweiten Traversierwinde ist über eine Umlenkrolle 28 aufgespannt. Die zweite Traversierwinde wird entsprechend der ersten Traversierwinde über die Verschiebung eines Arms 29 betätigt. Im Unterscheid zu dem ersten Ausführungsbeispiel, ist zudem in dem zweiten Ausführungsbeispiel die Winde 5 der ersten Traversierwinde auf dem zylindrischen Probenhalter 2 verschoben. Die Seilschlaufe 6 der ersten Traversierwinde ist zwischen den Umlenkrollen 7 und 8 über die Umlenkrollen 24, 25 umgeleitet, so dass die Verbindungsstrecke zwischen den Umlenkrollen 24, 25 senkrecht zur Achse A verläuft. Dieser Versatz der Winde 5 ändert nicht das Prinzip der entkoppelten Rotation um die Achsen A und T, da weiterhin zwischen den Umlenkrollen 9 und 7 sowie 8 und 10 Teile der Seilschlaufe auf beiden Seiten der Winde 5, mit der Achse T zusammenfallen.

Die Achsen A, T und Z sind zur Orientierung in den Figuren mit eingezeichnet.

Der Vorteil der Erfindung liegt in der Entkopplung der Rotationen um die beiden orthogonalen Achsen A und T der Vorrichtung und die weitgehende Entkopplung um eine weitere Achse Z. Zusätzlich sind alle Rotationen mechanisch zu bewirken. Die Traversierwinden sowohl als auch der Kurbeltrieb sind aus Materialien zu fertigen, die einem Einsatz in einem avisierten Temperaturbereich leicht anzupassen sind. Auch ist die einfache Ausführung ohne größeren Aufwand zu Miniaturisieren. Die rein mechanische Wirkweise in der Nähe der Probenaufnahme minimiert zudem einen Einfluss elektromagnetischer Strahlung auf eine Probe.

## Patentansprüche

1. Vorrichtung zur Rotation einer Probe um zwei orthogonale Achsen, mindestens umfassend
- eine Basis (18, 18', 18"),
- einen Sockel (1), welcher drehbar um eine erste Achse, welche exzentrisch des Sockels (1) liegt, an der Basis (18, 18', 18") angeordnet ist, und wobei durch diese erste Achse eine erste Achse T festgelegt ist, und die durch eine, über ein Versatzstück (19, 20) des Sockels (1) gefüfirte Drehachse (21, 22) gegeben ist, die an der Basis (18, 18', 18") oder dem Versatzstück (19, 20) fixiert ist,
- einen Probenhalter (2), welcher drehbar um eine zweite Achse A auf dem Sockel (1) angeordnet ist und wobei die zweite Achse A senkrecht zu der ersten Achse T orientiert ist und wobei der Probenhalter aus einem Zylinder gebildet ist dessen Achse die zweite Achse A bildet und wobei ein Mittelpunkt einer Probenaufnahme (4) an einem Ende des Zylinders (2) mit dem Schnittpunkt der Achsen A und T zusammenfällt,
- mechanisches Mittel zur Rotation des Sockels (1) um die erste Achse T,
- mechanisches Mittel zur Rotation des Probenhalters (2) um die zweite Achse A, aufweisend eine lineare Übertragungsrichtung für die Rotation und wobei
- die lineare Übertragungsrichtung der Rotation des mechanischen Mittels zur Rotation des Probenhalters (2) um die zweite Achse A mit der Achse T zusammenfällt und das mechanische Mittel zur Rotation des Probenhalters (2) um die zweite Achse A durch eine erste Traversierwinde (5, 6, 7, 8, 9, 10, 16) gebildet ist deren Winde (5) mit dem Probenfialter (2) fest verbunden ist.

2. Vorrichtung nach Anspruch 1,
**dadurch gekennzeichnet, dass**
die Basis (18, 18', 18") um eine dritte Achse Z drehbar ist, insbesondere um eine Achse Z die sich mit den Achsen T und A im gleichen Punkt schneidet.

3. Vorrichtung nach Anspruch 1,
**dadurch gekennzeichnet, dass**
eine Seilschlaufe (6) der ersten Traversierwinde (5, 6, 7, 8, 9, 10) durch Umlenkrollen (24, 25) parallel zur Achse T entlang der Achse A versetzt ist.

4. Vorrichtung nach einem der vorhergehenden Ansprüche,
**dadurch gekennzeichnet, dass**
das mechanische Mittel zur Rotation um die erste Achse T durch einen Kurbeltrieb (14, 15, 23) gebildet ist.

5. Vorrichtung nach einem der Ansprüche 1 bis 4,
**dadurch gekennzeichnet, dass**
das mechanische Mittel zur Rotation um die erste Achse T durch eine zweite Traversierwinde (26, 27, 28, 29) gebildet ist.

## Claims

1. Device for rotating a specimen about two orthogonal axes, comprising at least
- a base (18, 18', 18"),
- a socket (1) which is rotatably arranged on the base (18, 18', 18") about a first axis which is eccentric to the socket (1) 18"), and wherein this first axis defines a first axis T and is given by a rotation axis (21, 22) guided by an offset piece (19, 20) of the socket (1), which is fixed to the base (18, 18', 18") or the offset piece (19, 20),
- a specimen holder (2) which is arranged rotatably about a second axis A on the base (1), and wherein the second axis A is oriented perpendicular to the first axis T, and wherein the specimen holder is formed from a cylinder whose axis forms the second axis A, and wherein a center of a specimen receptacle (4) at one end of the cylinder (2) coincides with the intersection of the axes A and T,
- mechanical means for rotating the base (1) about the first axis T,
- mechanical means for rotating the specimen holder (2) about the second axis A, comprising a linear transmission direction for the rotation, and wherein
- the linear transmission direction of rotation of the mechanical means for rotating the specimen holder (2) about the second axis A coincides with the axis T, and the mechanical means for rotating the specimen holder (2) about the second axis A is formed by a first traversing winch (5, 6, 7, 8, 9, 10, 16), the winch (5) of which is fixedly connected to the specimen holder (2).

2. Device according to claim 1,
**characterized in that**
the base (18, 18', 18") is rotatable about a third axis Z, in particular about an axis Z that intersects the axes T and A at the same point.

3. Device according to claim 1,
**characterized in that**
a rope loop (6) of the first traversing winch (5, 6, 7, 8, 9, 10) is offset parallel to the axis T along the axis A by deflection pulleys (24, 25).

4. Device according to one of the preceding claims,
**characterized in that**
the mechanical means for rotation about the first axis T is formed by a crank mechanism (14, 15, 23).

5. Device according to one of claims 1 to 3,
**characterized in that**
the mechanical means for rotation about the first axis T is formed by a second traversing winch (26, 27, 28, 29).

## Revendications

1. Dispositif pour faire tourner un échantillon autour de deux axes orthogonaux, comprenant au moins
- une base (18, 18', 18"),
- un socle (1) monté pivotant sur la base (18, 18', 18") autour d'un premier axe excentré du socle (1) et ce premier axe définissant un premier axe T et étant donné par un axe de rotation (21, 22) guidé par une pièce de décalage (19, 20) du socle (1) et fixé à la base (18, 18', 18") ou à la pièce de décalage (19, 20),
- un porte-échantillon (2) qui est disposé de manière rotative autour d'un deuxième axe A sur le socle (1), le deuxième axe A étant orienté perpendiculairement au premier axe T, le porte-échantillon étant formé d'un cylindre dont l'axe constitue le deuxième axe A, et le centre d'un logement d'échantillon (4) à une extrémité du cylindre (2) coïncide avec le point d'intersection des axes A et T,
- des moyens mécaniques pour faire tourner le socle (1) autour du premier axe T,
- des moyens mécaniques pour faire tourner le porte-échantillon (2) autour du deuxième axe A, présentant une direction de transmission linéaire pour la rotation, et
- la direction de transmission linéaire de la rotation du moyen mécanique pour faire tourner le porte-échantillon (2) autour du deuxième axe A coïncide avec l'axe T et le moyen mécanique pour faire tourner le porte-échantillon (2) autour du deuxième axe A est formé par un premier treuil de traversée (5, 6, 7, 8, 9, 10, 16) dont le treuil (5) est relié de manière fixe au porte-échantillon (2).

2. Dispositif selon la revendication 1,
**caractérisé en ce que**
la base (18, 18', 18") peut tourner autour d'un troisième axe Z, en particulier autour d'un axe Z qui coupe les axes T et A en un même point.

3. Dispositif selon la revendication 1,
**caractérisé en ce qu'**
une boucle de câble (6) du premier treuil de traversée (5, 6, 7, 8, 9, 10) est décalée parallèlement à l'axe T le long de l'axe A par des poulies de renvoi (24, 25).

4. Dispositif selon l'une des revendications précédentes,
**caractérisé en ce que**
le moyen mécanique de rotation autour du premier axe T est constitué par un mécanisme à manivelle (14, 15, 23).

5. Dispositif selon l'une des revendications 1 à 3,
**caractérisé en ce que**
le moyen mécanique de rotation autour du premier axe T est constitué par un deuxième treuil de traversée (26, 27, 28, 29).
